# EUROPÄISCHE PATENTSCHRIFT

(11) **EP 2 924 309 B1**
(45) Veröffentlichungstag und Bekanntmachung des Hinweises auf die Patenterteilung: **04.10.2017**
(21) Anmeldenummer: 15158802.7
(22) Anmeldetag: 12.03.2015
(51) Int. Cl.: F16D 13/58, F16D 23/14

(54) **TELLERFEDEREINRICHTUNG MIT DRUCKSTÜCK**
PLATE SPRING DEVICE WITH PRESSURE PIECE
DISPOSITIF À RONDELLE CONIQUE DOTÉ DE PLAQUE D'APPUI

(30) Priorität: 26.03.2014 DE 102014205622
(43) Veröffentlichungstag der Anmeldung: 30.09.2015
(73) Patentinhaber: Schaeffler Technologies AG & Co. KG, 91074 Herzogenaurach (DE)
(72) Erfinder: Voorspoels, Ludovic, 67410 Drusenheim (FR); Fohrer, Thierry, 67850 Offendorf (FR); Merckling, Tony, 67340 Schillersdorf (FR)

(56) Entgegenhaltungen:
- EP-A1- 0 205 320
- EP-A1- 0 220 982
- DE-A1- 1 475 273
- DE-A1- 2 503 896
- DE-A1- 3 215 886
- US-A- 2 630 897

## Beschreibung

Die Erfindung betrifft eine Tellerfedereinrichtung mit Tellerfeder und Druckstück für ein Kraftfahrzeug, gemäß dem Oberbegriff von Patentanspruch 1.

Tellerfederkupplungen sind im Automotive-Bereich gebräuchlich zur steuerbaren bzw. trennbaren Kraftübertragung zwischen Verbrennungsmotor und Getriebe. Bekannte Tellerfederkupplungen umfassen typischerweise ein mit der Schwungscheibe des Motors verbundenes, also mit dem Motor rotierendes Kupplungsgehäuse, eine entlang einer Kreislinie gelenkig mit dem Kupplungsgehäuse verbundene Tellerfeder sowie eine Anpressplatte, welche sich mittels der Tellerfeder auf eine mit der Getriebe-Eingangswelle verbundene Kupplungsscheibe mit Reibbelägen pressen lässt. Auf diese Weise wird die Kupplungsscheibe durch den Druck der Tellerfeder zwischen Anpressplatte und Schwungscheibe eingeklemmt und stellt somit eine reibschlüssige, lösbare rotatorische Kopplung zwischen Schwungscheibe und Getriebewelle her.

Die Betätigung der Tellerfeder erfolgt üblicherweise mittels eines Ausrückers bzw. Aktors, mit dem sich die radial nach innen weisenden Enden der Tellerfederzungen in kupplungsaxialer Richtung bewegen lassen. Bei gezogener Kupplungsbetätigung erfolgt diese axiale Betätigung der Tellerfederzungen mittels einer von der Kupplung weg ziehenden Bewegung des Ausrückers, während gedrückte Kupplungsbetätigung bedeutet, dass sich der Ausrücker zur Betätigung der Tellerfederzungen in Richtung auf die Kupplung hin bewegt. Außer der gezogenen und der gedrückten Kupplungsbetätigung sind auch doppeltwirkende Kupplungsausrücker bekannt, bei denen sowohl eine ziehende als auch eine drückende Betätigung der Kupplungs-Tellerfeder durch den Ausrücker bzw. Kupplungsaktor möglich ist. Durch eine dergestalt doppeltwirkende Kupplungsbetätigung lassen sich zusätzliche Funktionalitäten realisieren, beispielsweise eine aktive Kupplungsrückstellung, eine Schnappfederauslegung der Tellerfeder zur Reduzierung der Ausrückkraft, oder die vorübergehende Erhöhung der Drehmomentübertragung durch zusätzliches, aktives Ziehen an den Tellerfederzungen, am Beispiel einer Kupplung mit gedrückter Betätigung.

Bei bekannten doppeltwirkenden Kupplungsausrückern bzw. -aktoren werden die radial nach innen weisenden Enden der Tellerfederzungen grundsätzlich zwischen zwei oder mehreren separaten Klemmelementen eines Aktorkörpers bzw. zwischen entsprechenden Klemmelementen eines mit dem Aktorkörper verbindbaren Druckstücks eingeklemmt oder eingeschlossen. Bei den Klemmelementen kann es sich beispielsweise um jeweils mehrere Scheiben, Ringe, Federn oder Hülsen handeln, die bei der Kupplungsmontage beidseitig der Tellerfeder angeordnet und mittels geeigneter Verbindungselemente miteinander so verbunden werden müssen, dass die Innenenden der Tellerfederzungen beidseitig eingeschlossen sind. Dies bedeutet, dass die Zungen der Tellerfeder beim Stand der Technik durch ein vergleichweise aufwändiges, da aus mehreren Elementen zusammenzubauendes Druckstück bzw. einen dementsprechend aufwändigen, gebauten Aktorkörper umschlossen werden müssen.

Dies führt zu einer entsprechend aufwändigen Herstellung und Montage dergestalt doppeltwirkend betätigter Tellerfederkupplungen, wobei die bekannten doppeltwirkendem Aktorkörper bzw. Druckstücke zudem einen vergleichsweise großen Bauraum im Inneren der Kupplung benötigen.

Eine Tellerfedereinrichtung, die auf den Oberbegriff des Patentanspruchs 1 lesbar ist, ist jeweils aus der EP 0 205 320 A1 und der US 2 630 897 bekannt. Aus der DE 32 15 886 A1 und der DE 25 03 896 A1 ist jeweils eine Tellerfeder bekannt, bei der die Innenenden einer vorderseitigen Gruppe von Tellerfederzungen an einer kupplungsaxialen Vorderseite des Druckstücks und die Innenenden einer rückseitigen Gruppe von Tellerfederzungen an einer der Vorderseite gegenüberliegenden kupplungsaxialen Rückseite des Druckstücks zur Anlage gebracht sind dergestalt, dass die Innenenden der beiden Gruppen von Tellerfederzungen das Druckstück in beiden kupplungsaxialen Richtungen einschließend umgreifen.

Es ist Aufgabe der vorliegenden Erfindung, eine doppeltwirkend betätigbare Tellerfedereinrichtung mit Aktorkörper bzw. Druckstück zu schaffen, die im Vergleich zum Stand der Technik einfacher, kostengünstiger und bauraumsparender zu realisieren ist.

Die Aufgabe wird erfindungsgemäß gelöst durch eine Tellerfedereinrichtung gemäß Patentanspruch 1. Bevorzugte Ausführungsbeispiele sind in den abhängigen Patentansprüchen dargelegt.

Die Tellerfedereinrichtung gemäß der vorliegenden Erfindung umfasst dabei in zunächst bekannter Weise eine Tellerfeder mit einer Mehrzahl im Wesentlichen radial verlaufenden Tellerfederzungen, wobei die Tellerfederzungen radial nach innen weisende Innenenden zum kraftübertragenden Angriff eines Ausrückers, Druckstücks bzw. Aktors aufweisen. Weiterhin umfasst die Tellerfedereinrichtung ein durch einen Aktorkörper in kupplungsaxialer Richtung bewegbares Druckstück zur doppeltwirkenden Betätigung der Tellerfederzungen, indem zwischen Druckstück und Tellerfeder ein in beiden kupplungsaxialen Richtungen wirkender, formschlüssiger Umgriff vorhanden ist.

Erfindungsgemäß zeichnet sich die Tellerfedereinrichtung dadurch aus, dass das in Eingriff mit den Innenenden der Tellerfederzungen stehende Druckstück im Wesentlichen einstückig ausgebildet sowie im Bereich der Innenenden entlang beider kupplungsaxialer Richtungen formschlüssig in die Tellerfeder eingebettet ist.

Dies bedeutet mit anderen Worten, dass nicht mehr ein aufwändiger mehrteiliger, gebauter Aktorkörper bzw. ein dementsprechend mehrteiliges, gebautes Druckstück erforderlich ist, um die Kupplungstellerfeder sowohl in Zug- als auch in Druckrichtung zu betätigen. Die aus dem Stand der Technik bekannten, aus komplizierten mehrteiligen Anordnungen zusammengesetzten doppeltwirkenden Druckstücke können somit durch ein sehr einfach gestaltbares Druckstück ersetzt werden, welches kupplungsaxial in beiden Richtungen formschlüssig auf die Tellerfederzungen wirkt, indem das Druckstück formschlüssig in die Tellerfeder eingebettet ist. Die Vorteile, die sich daraus ergeben, umfassen insbesondere Kostenersparnis bei Herstellung und Montage sowie eine mögliche Reduzierung der Variantenanzahl durch Verwendung im Wesentlichen ein und derselben Anordnung aus Tellerfeder und Druckstück sowohl für die gezogene, als auch für die gedrückte, als auch für eine doppeltwirkende Kupplungsbetätigung. Ferner lässt sich der von Druckstück bzw. Kupplungsaktor benötigte Bauraum wesentlich reduzieren, wodurch die Kupplung kompakter gestaltet oder bei unverändertem Bauraum zusätzliche Funktionalitäten realisiert werden können.

Die erfindungsgemäße, "im Wesentlichen einstückige" Ausbildung des Druckstücks ist im Sinne der Erfindung dabei so zu verstehen, dass zur Verwirklichung der Erfindung grundsätzlich keine Notwendigkeit mehr besteht, ein mehrteiliges Druckstück vorzusehen, um damit die Betätigung der Tellerfeder sowohl in Zug- als auch in Druckrichtung zu ermöglichen. Die Erfindung wird jedoch auch verwirklicht, falls das Druckstück sich aus anderen Gründen wieder aus mehreren Teilen zusammensetzen sollte, etwa aus Gründen der einfacheren Urformung, oder um einfacher mit dem Aktorkörper bzw. Ausrücker verbunden bzw. in die Tellerfeder eingebettet werden zu können.

Für die Verwirklichung der Erfindung ist es zunächst unerheblich, auf welche Weise das Druckstück formschlüssig in die Tellerfeder eingebettet wird, solange der erfindungsgemäße, axial beiderseitige Umgriff zwischen dem im Wesentlichen einstückigen Druckstück und den Innenenden der Tellerfederzungen gewährleistet ist.

Gemäß einer ersten Ausführungsform der Erfindung ist diesbezüglich vorgesehen, dass das Druckstück entlang seines Außenumfangs eine umlaufende Nut oder eine Mehrzahl von Ausnehmungen aufweist, wobei einige oder alle Innenenden der Tellerfederzungen formschlüssig mit der Nut bzw. mit den Ausnehmungen des Druckstücks in Eingriff gebracht sind. Diese Ausführungsform stellt somit eine Ausführungsform dar, bei der die Enden einiger oder aller Tellerfederzungen in die Nut bzw. die Ausnehmungen am Außenumfang des Druckstücks eingelegt sind. Das Einlegen der Zungenenden in die Nut bzw. in die Ausnehmungen des Druckstücks kann dabei insbesondere bei der Urformung oder Umformung der Tellerfeder erfolgen, indem beispielsweise die Enden der Tellerfederzungen plastisch oder elastisch verformt und in die Nut bzw. in die Ausnehmungen am Außenumfang des Druckstücks eingebracht werden, wodurch Druckstück und Tellerfeder eine formschlüssige untrennbare Einheit bilden. Alternativ kann die Einbettung der Zungenenden in entsprechende Ausnehmungen des Druckstücks umgekehrt bei der Urformung des Druckstücks erfolgen, indem das Druckstück um die Zungenenden der Tellerfeder herum urgeformt, beispielsweise gegossen, geschmiedet bzw. (ein- oder mehrteilig) gepresst wird.

In allen diesen Fällen ergibt sich ein erfindungsgemäß im Wesentlichen einstückig ausgebildetes Druckstück, welches entlang beider kupplungsaxialer Richtungen formschlüssig in die Tellerfeder eingebettet ist.

Gemäß einer weiteren, bevorzugten Ausführungsform der Erfindung ist das Druckstück in die Tellerfeder eingebettet, indem die Innenenden einer Druckstück-bezogen vorderseitigen Gruppe von Tellerfederzungen an der kupplungsaxialen, einem Kupplungsaktor zugewandten Vorderseite des Druckstücks, und die Innenenden einer Druckstück-bezogen rückseitigen Gruppe von Tellerfederzungen an einer der Vorderseite des Druckstücks gegenüberliegenden Rückseite des Druckstücks zur Anlage gebracht sind dergestalt, dass die Innenenden der beiden Gruppen von Tellerfederzungen das Druckstück in beiden kupplungsaxialen Richtungen einschließend umgreifen.

Bei dieser zur erstgenannten Ausführungsform alternativen Ausführungsform umgreift somit nicht das Druckstück die Enden der Tellerfederzungen im Wesentlichen einstückig, sondern es schließen umgekehrt die Enden der Tellerfederzungen das Druckstück in beiden kupplungsaxialen Richtungen formschlüssig ein. Auf diese Weise ergibt sich ebenfalls ein vorteilhafter Ersatz der aus komplizierten mehrteiligen Anordnungen zusammengesetzten Druckstücke aus dem Stand der Technik, welche die Tellerfeder axial beidseitig umgreifen, durch das umgekehrte Prinzip des axial beidseitigen Umgriffs der Tellerfeder um das somit sehr einfach gestaltbare Druckstück.

Diese Ausführungsform weist dieselben Vorteile wie die vorgenannte Ausführungsform auf, nämlich insbesondere Kosten- und Bauraumersparnis sowie einfachere Kupplungsmontage.

Als weiterer Vorteil kommt hinzu, dass bei dieser Ausführungsform dauerhafte Spielfreiheit der Verbindung von Druckstück und Tellerfeder gewährleistet werden kann, da das Druckstück durch den beidseitig am Druckstück erfolgenden, federnd elastischen Angriff der Zungenenden dauerhaft spielfrei in die Tellerfeder eingebettet ist.

Beide vorgenannten Ausführungsformen eint der Vorteil einer möglichen Reduzierung der Variantenanzahl, indem ein und dieselbe Anordnung aus Tellerfeder und darin eingebettetem Druckstück prinzipiell sowohl für Kupplungen mit gezogener, als auch mit gedrückter, als auch mit doppeltwirkender Betätigung eingesetzt werden kann.

Bei der letztgenannten Ausführungsform ist es dabei zunächst unerheblich, zu welchen Teilen die Tellerfederzungen auf der Vorderseite des in die Tellerfeder eingebetteten Druckstücks, und zu welchen Teilen die Tellerfederzungen auf der Rückseite des Druckstücks zu liegen kommen, solange der axial beidseitige Einschluss des Druckstücks in die Tellerfeder gewährleistet ist.

Gemäß einer bevorzugten Ausführungsform sind die Innenenden der vorderseitigen sowie der rückseitigen Gruppe von Tellerfederzungen entlang der Tellerfeder-Umfangsrichtung alternierend sowie in jeweils gleichem Verhältnis auf der Vorderseite und auf der Rückseite des Druckstücks anliegend angeordnet. Auf diese Weise ergibt sich ein rundum gleichmäßiger Einschluss des Druckstücks, jeweils in beiden kupplungsaxialen Richtungen, durch die somit auf beiden Seiten des Druckstücks gleichmäßig verteilt angeordneten Zungenenden.

Alternativ können die Innenenden der beiden Gruppen von Tellerfederzungen entlang der Tellerfeder-Umfangsrichtung alternierend sowie in unterschiedlichem Verhältnis auf der Vorderseite und auf der Rückseite des Druckstücks anliegend angeordnet sein. Diese Alternative zur vorstehenden Ausführungsform ermöglicht insbesondere unterschiedliche effektive Steifigkeiten der Tellerfedereinrichtung in Zugrichtung und in Druckrichtung, und damit entsprechend unterschiedliche Kupplungscharakteristiken je nach Betätigungsrichtung.

Gemäß einer weiteren Ausführungsform ist vorgesehen, dass auf der Vorderseite des Druckstücks zur Anlage gebrachte Tellerfederzungen eine andere Form und/oder Federsteifigkeit aufweisen als auf der Rückseite des Druckstücks zur Anlage gebrachte Tellerfederzungen. Auch mit dieser Ausführungsform können unterschiedliche Steifigkeiten der Kupplungsbetätigung in Zugrichtung und in Druckrichtung, und damit entsprechend unterschiedliche Kupplungscharakteristiken je nach Betätigungsrichtung realisiert werden.

Eine weitere bevorzugte Ausführungsform der Erfindung sieht vor, dass das Druckstück der Tellerfedereinrichtung zum radial einschließenden Umgriff eines Aktorkörpers der Kupplung eingerichtet ist dergestalt, dass Aktorkörper und Druckstück mittels des radial einschließenden Umgriffs formschlüssig miteinander verbindbar sind. Zwar kann das Druckstück auch einstückig mit einem Aktorkörper des Kupplungsausrückers verbunden bzw. ausgebildet sein, die zweiteilige Form von Druckstück und Aktorkörper gemäß der vorliegenden Ausführungsform ist jedoch vorteilhaft für die Kupplungsmontage, da das Druckstück so bereits bei der Herstellung der Tellerfeder formschlüssig in die Tellerfeder integriert wird, während der Zusammenbau der erfindungsgemäßen Einheit aus Tellerfeder und Druckstück mit einem Aktorkörper der Kupplung dank dieser Ausführungsform erst später bei der Kupplungsmontage erfolgen kann.

Auf welche Weise die formschlüssige Verbindung zwischen Druckstück und Aktorkörper gemäß der vorstehenden Ausführungsform konstruktiv erfolgt, ist zunächst beliebig, solange die Betätigungskräfte der Kupplung übertragen werden können. Am Innenumfang des Druckstücks sowie am Außenumfang des Aktorkörpers ist jeweils eine umlaufende Nut angeordnet, wobei ein federnder Drahtring vorgesehen ist, der - beide Nuten übergreifend - in den Nuten anordenbar ist. Auf diese Weise lassen sich Druckstück und Aktorkörper mittels des Drahtrings in kupplungsaxialer Richtung formschlüssig verbinden. Die Verbindung mittels des federnden Drahtrings ist insbesondere vorteilhaft insofern, als sie besonders einfach und schnell mittels gegenseitig einrastendem Zusammenfügen von Aktorkörper, Drahtring und Druckstück hergestellt werden kann.

Beispielhaft für mögliche Ausführungsformen zeigen die Figuren jeweils erfindungsgemäße Vorrichtungen. Dabei zeigt
**Fig. 1** in schematischer isometrischer Darstellung eine Tellerfedereinrichtung gemäß einer Ausführungsform der Erfindung;
**Fig. 2** in einer Schnittdarstellung die Tellerfedereinrichtung gemäß Fig. 1;
**Fig. 3** Tellerfeder und Druckstück der Tellerfedereinrichtung gemäß Fig. 1 und 2 während eines erfindungsgemäßen Verfahrensschritts;
**Fig. 4** Tellerfeder und Druckstück der Tellerfedereinrichtung gemäß Fig. 1 bis 3 nach dem Zusammenfügen;
**Fig. 5** Aktorkörper und Drahtring vor der Verbindung miteinander und mit dem Druckstück;
**Fig. 6** Aktorkörper und Drahtring gemäß Fig. 5 nach der Verbindung miteinander; und
**Fig. 7** eine Tellerfedereinrichtung gemäß Fig. 1 bis 4 mit darin formschlüssig angeordnetem Druckstück gemäß Fig. 5 und 6.

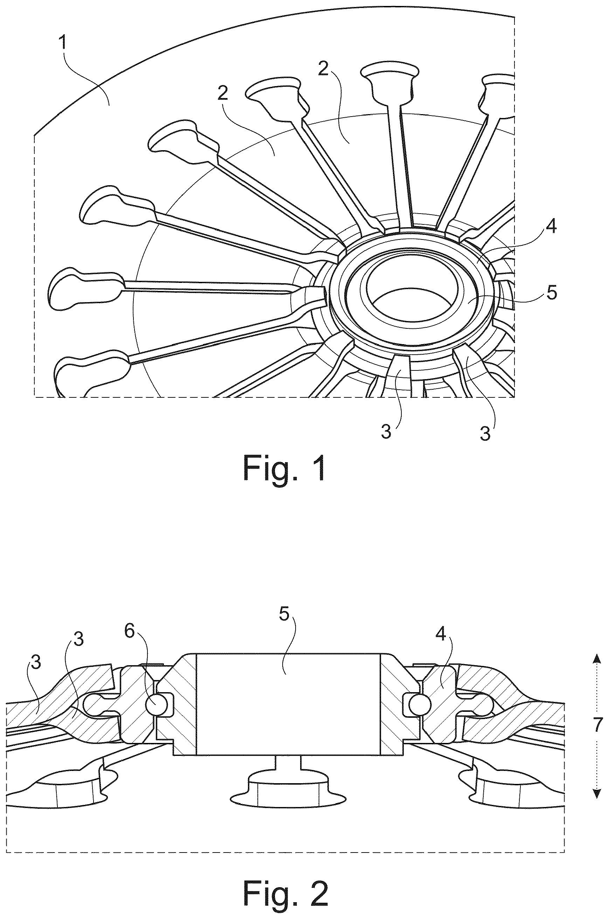

**Fig. 1** zeigt eine Tellerfedereinrichtung gemäß einer Ausführungsform der vorliegenden Erfindung. Man erkennt eine Tellerfeder 1, die eine Vielzahl von Federzungen 2 aufweist. Über die Federzungen 2 erfolgt in einer Kupplung die Kupplungsbetätigung, indem die Federzungen mittels eines (nicht dargestellten) Ausrückers entlang der kupplungsaxialen Richtung (vgl. Bezugsziffer 7 in Fig. 2) dergestalt kraftbeaufschlagt werden, dass die Tellerfeder 1 in sich verkippt wird, wodurch über die (nicht dargestellte) kreisringförmig gelenkige Anbindung der Tellerfeder am Kupplungsgehäuse eine Kupplungs-Anpressplatte auf eine Kupplungsscheibe mit Reibbelägen (je nach Kupplungsbauart) entweder gepresst wird, oder die Pressung der Anpressplatte auf die Kupplungsscheibe aufgehoben wird.

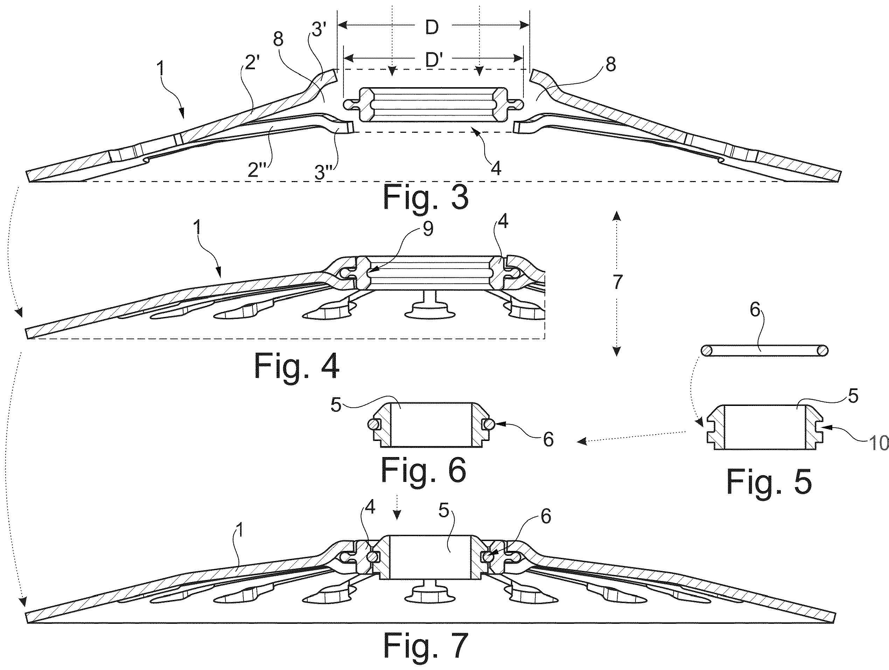

Ferner wird in Fig. 1 das Druckstück 4 und dessen formschlüssige Einbettung zwischen den Federzungen 2 der Tellerfeder 1 ersichtlich. Man erkennt, dass die radial inneren Enden der Federzungen 2 abwechselnd nach zeichnungsbezogen oben bzw. unten abgebogen sind, so dass zwischen den Enden der Federzungen 2 ein im Wesentlichen ringförmiger Raum gebildet wird (vgl. Bezugsziffer 8 in Fig. 3), in dem wiederum das Druckstück formschlüssig angeordnet ist. Auf diese Weise werden gegenüber der aus dem Stand der Technik bekannten Kraftübertragung zwischen Druckstück 4 und Federzungen 2 (dadurch, dass ein mehrteiliges Druckstück bei der Montage aufwändig um die Tellerfeder herum gebaut werden muss) in entscheidendem Umfang Montageaufwand und Einzelteile ebenso wie Bauraum und Gewicht eingespart.

**Fig. 2** zeigt die Tellerfedereinrichtung gemäß Fig. 1 in ausschnittsweiser Schnittdarstellung, geschnitten entlang der Richtung 7 der Kupplungsachse. Man erkennt wieder die abwechselnd nach zeichnungsbezogen oben und unten gebogenen Enden 3 der Federzungen 2 gemäß Fig. 1, sowie den dazwischen gebildeten ringförmigen Raum (vgl. Bezugsziffer 8 in Fig. 3), in dem bei der vorliegenden Ausführungsform ein umlaufender ringartiger Bereich des Druckstücks 4 formschlüssig aufgenommen ist. Dies bedeutet, dass die Tellerfeder 1 gemäß Fig. 1 bei einer aktuierenden Bewegung durch das Druckstück 4 entlang der kupplungsaxialen Richtung 7 entsprechend in sich verkippt wird unabhängig davon, ob eine drückende Kupplungsbetätigung (mit Bewegung des Druckstücks 4 zeichnungsbezogen nach unten) oder eine ziehende Kupplungsbetätigung (mit Bewegung des Druckstücks 4 zeichnungsbezogen nach oben) stattfindet.

Anhand einer Zusammenschau der Fig. 1 und 2 wird auch deutlich, dass die erfindungsgemäße Tellerfedereinrichtung gegenüber dem Stand der Technik der aufwändig gebauten doppeltwirkenden Druckstücke bzw. Tellerfedereinrichtungen maßgebliche Einsparungen von Bauraum, Gewicht und Montageaufwand - bezüglich der doppeltwirkenden Verbindung zwischen Druckstück 4 und Tellerfeder 1 - mit sich bringt.

Ferner wird in Fig. 2 auch bereits die formschlüssige Verbindung zwischen Druckstück 4 und Aktorkörper 5 mittels des federnden Drahtrings 6 ersichtlich, die im Detail aus den Fig. 5 bis 7 sowie der zugehörigen Beschreibung hervorgeht.

Fig. 3 und 4 zeigen, auf welche Weise das Druckstück 4 gemäß einer Ausführungsform der Erfindung in die Tellerfeder 1 eingebettet wird. Hierzu wird zunächst zumindest eine Gruppe 2' von Tellerfederzungen (hier zeichnungsbezogen obenliegend) dergestalt positioniert bzw. aufgebogen, dass der von den zugehörigen Zungen-Innenenden 3' aufgespannte Kreisdurchmesser D größer ist als der maximale Außendurchmesser D' des Druckstücks 4. Nachfolgend wird das Druckstück 4 durch den so eröffneten Kreis D hindurch in den im Wesentlichen ringförmigen Raum 8 zwischen den Innenenden 3', 3" eingebracht, woraufhin die Gruppen von Tellerfederzungen 2' und/oder 2" dergestalt zurückpositioniert bzw. -verformt werden, dass das Druckstück 4 gemäß Fig. 4 formschlüssig entlang beider kupplungsaxialer Richtungen 7 in die Tellerfeder 1 eingebettet wird.

Die Art und Herstellung der Verbindung zwischen einem Aktorkörper 5 der Kupplung und dem in die Tellerfeder 1 eingebetteten Druckstück 4 wird anhand der Fig. 5 bis 7 ersichtlich. Hierzu wird gemäß Fig. 5 ein federnder, insbesondere nicht gänzlich geschlossener Drahtring 6 in Axialrichtung 7 über den hierzu eine Ringnut 10 aufweisenden Aktorkörper 5 gedrückt, bis dieser gemäß Fig. 6 in der Ringnut 10 des Aktorkörpers 5 zu liegen kommt. Die Ringnut 10 weist dabei eine Nuttiefe auf, die annähernd so groß ist wie der Drahtdurchmesser des Drahtrings 6. Auf diese Weise kann der Drahtring 6 beim Eindrücken der Einheit aus Aktorkörper 5 und Drahtring 6 in das Druckstück 4 - anhand einer am Innendurchmesser des Druckstücks 4 vorhandenen umlaufenden Fase bzw. Abschrägung - zumindest so tief in die Ringnut 10 am Aktorkörper 5 verdrängt werden, dass der minimale Innendurchmesser des Druckstücks 4 den Drahtring 6 überwinden, und das Druckstück 4 anschließend seinerseits mit einer am Innenumfang des Druckstücks 4 angeordneten Ringnut 9 formschlüssig rastend auf dem Drahtring 6 zu liegen kommt.

Hingegen ist die Nuttiefe der Ringnut 9 am Innenumfang des Druckstücks 4 vorzugsweise gleich groß oder nur geringfügig größer als der halbe Drahtdurchmesser des Drahtrings 6. Dies führt zusammen mit der im Wesentlichen rechteckigen Formgebung der Ringnut 10 am Aktorkörper 5 dazu, dass bei Kupplungsbetätigung auftretende Axialkräfte zwischen Aktorkörper 5 und Druckstück 4 absolut zuverlässig über den Drahtring 6 übertragen werden können, ohne dass Gefahr besteht, dass der Drahtring wieder nach radial innen in die Nut am Aktorkörper 5 verdrängt wird, wodurch sich die formschlüssige Verbindung zwischen Aktorkörper 5 und Druckstück 4 andernfalls lösen könnte.

Bei der dargestellten Ausführungsform sind Druckstück 4 und Aktorkörper 5 somit - nach gegenseitiger Montage mittels des Drahtrings 6 - unlösbar formschlüssig miteinander verbunden.

### Bezugszeichenliste

- 1: Tellerfeder
- 2: Federzunge
- 3: Federzungen-Innenende
- 4: Druckstück
- 5: Aktorkörper, Ausrückerkörper
- 6: Drahtring
- 7: Kupplungs-Axialrichtung
- 8: ringförmiger Raum
- 9, 10: Ringnut

## Patentansprüche

1. Tellerfedereinrichtung für eine Kraftfahrzeugkupplung, die Tellerfedereinrichtung umfassend eine Tellerfeder (1) mit einer Mehrzahl im Wesentlichen radial verlaufender Tellerfederzungen (2) mit radial nach innen weisenden Innenenden (3), sowie ein Druckstück (4) zur doppeltwirkenden Betätigung der Tellerfederzungen (2) mittels kupplungsaxial (7) beidseitigen Umgriffs von Druckstück (4) und Tellerfeder (1), wobei das Druckstück durch einen Aktorkörper (5) in kupplungsaxialer Richtung (7) bewegbar ist, wobei das Druckstück (4) im Wesentlichen einstückig ausgebildet und im Bereich der Innenenden (3) entlang beider kupplungsaxialer Richtungen (7) formschlüssig in die Tellerfeder (1) eingebettet ist, **dadurch gekennzeichnet, dass** die Innenenden (3') einer vorderseitigen Gruppe (2') von Tellerfederzungen (2) an einer kupplungsaxialen (7) Vorderseite des Druckstücks (4) und die Innenenden (3") einer rückseitigen Gruppe (2") von Tellerfederzungen (2) an einer der Vorderseite gegenüberliegenden kupplungsaxialen (7) Rückseite des Druckstücks (4) zur Anlage gebracht sind dergestalt, dass die Innenenden (3', 3") der beiden Gruppen (2', 2") von Tellerfederzungen (2) das Druckstück (4) in beiden kupplungsaxialen Richtungen (7) einschließend umgreifen, wobei das Druckstück (4) zum radial einschließenden Umgriff eines Aktorkörpers (5) der Kupplung eingerichtet ist dergestalt, dass Aktorkörper (5) und Druckstück (4) mittels des radial einschließenden Umgriffs formschlüssig miteinander verbindbar sind, und am Innenumfang des Druckstücks (4) sowie am Außenumfang des Aktorkörpers (5) jeweils eine umlaufende Nut (9, 10) angeordnet ist, wobei ein federnder Drahtring (6) beide Nuten (9, 10) übergreifend in den Nuten (9, 10) anordenbar ist dergestalt, dass Druckstück (4) und Aktorkörper (5) mittels des Drahtrings (6) in kupplungsaxialer Richtung (7) formschlüssig verbindbar sind.

2. Tellerfedereinrichtung nach Anspruch 1, **dadurch gekennzeichnet, dass** Innenenden (3', 3") der beiden Gruppen (2', 2") von Tellerfederzungen (2) entlang der Tellerfeder-Umfangsrichtung alternierend sowie in gleichem Verhältnis auf der Vorderseite und auf der Rückseite des Druckstücks (4) anliegend angeordnet sind.

3. Tellerfedereinrichtung nach Anspruch 1, **dadurch gekennzeichnet, dass** Innenenden (3', 3") der beiden Gruppen (2', 2") von Tellerfederzungen (2) entlang der Tellerfeder-Umfangsrichtung in unterschiedlichem Verhältnis auf der Vorderseite und auf der Rückseite des Druckstücks (4) anliegend angeordnet sind.

4. Tellerfedereinrichtung nach einem der Ansprüche 1 bis 3, **dadurch gekennzeichnet, dass** auf der Vorderseite des Druckstücks (4) zur Anlage gebrachte Tellerfederzungen (2', 3') eine andere Form und/oder Federsteifigkeit aufweisen als auf der Rückseite des Druckstücks (4) zur Anlage gebrachte Tellerfederzungen (2", 3").

## Claims

1. Cup spring device for a motor vehicle clutch, the cup spring device comprising a cup spring (1) with a plurality of substantially radially running cup spring tongues (2) with radially inwardly pointing inner ends (3), and a rocker pressure piece (4) for the double-acting actuation of the cup spring tongues (2) by means of engaging around the rocker pressure piece (4) and the cup spring (1) on both sides axially (7) with respect to the clutch, it being possible for the rocker pressure piece to be moved in the axial direction (7) with respect to the clutch by way of an actuator body (5), the rocker pressure piece (4) being of substantially single-piece configuration and, in the region of the inner ends (3), being embedded in a positively locking manner into the cup spring (1) along both axial directions (7) with respect to the clutch, **characterized in that** the inner ends (3') of a frontside group (2') of cup spring tongues (2) on an axial (7) front side of the rocker pressure piece (4) with respect to the clutch and the inner ends (3") of a rear-side group (2") of cup spring tongues (2) on an axial (7) rear side of the rocker pressure piece (4) with respect to the clutch, which rear side lies opposite the front side, are brought into contact in such a way that the inner ends (3', 3") of the two groups (2', 2") of cup spring tongues (2) engage around the rocker pressure piece (4) in an enclosing manner in both axial directions (7) with respect to the clutch, the rocker pressure piece (4) being set up to engage around an actuator body (5) of the clutch in a radially enclosing manner, in such a way that the actuator body (5) and the rocker pressure piece (4) can be connected to one another in a positively locking manner by means of the radially enclosing engagement, and in each case one circumferential groove (9, 10) being arranged on the inner circumference of the rocker pressure piece (4) and on the outer circumference of the actuator body (5), it being possible for a resilient wire ring (6) to be arranged in the grooves (9, 10) so as to engage over both grooves (9, 10), in such a way that the rocker pressure piece (4) and the actuator body (5) can be connected in a positively locking manner by means of the wire ring (6) in an axial direction (7) with respect to the clutch.

2. Cup spring device according to Claim 1, **characterized in that** inner ends (3', 3") of the two groups (2', 2") of cup spring tongues (2) are arranged so as to alternate along the cup spring circumferential direction and so as to bear to an equal measure on the front side and on the rear side of the rocker pressure piece (4).

3. Cup spring device according to Claim 1, **characterized in that** inner ends (3', 3") of the two groups (2', 2") of cup spring tongues (2) are arranged along the cup spring circumferential direction so as to bear to a different measure on the front side and on the rear side of the rocker pressure piece (4).

4. Cup spring device according to one of Claims 1 to 3, **characterized in that** cup spring tongues (2', 3') which are brought into contact on the front side of the rocker pressure piece (4) have a different shape and/or spring stiffness than cup spring tongues (2", 3") which are brought into contact on the rear side of the rocker pressure piece (4).

## Revendications

1. Dispositif à rondelle conique pour un embrayage de véhicule automobile, le dispositif à rondelle conique comprenant une rondelle conique (1) avec une multiplicité de languettes de rondelle conique (2) s'étendant essentiellement radialement avec des extrémités intérieures (3) orientées radialement vers l'intérieur, ainsi qu'une plaque d'appui (4) pour l'actionnement à double effet des languettes de rondelle conique (2) au moyen du serrage bilatéral selon l'axe d'embrayage (7) de la plaque d'appui (4) et de la rondelle conique (1), dans lequel la plaque d'appui est déplaçable dans la direction axiale de l'embrayage (7) au moyen d'un corps d'actionneur (5), dans lequel la plaque d'appui (4) est réalisée essentiellement en une seule pièce et est logée par emboîtement dans la rondelle conique (1) dans la région des extrémités intérieures (3) le long des deux directions axiales de l'embrayage (7), **caractérisé en ce que** les extrémités intérieures (3') d'un groupe antérieur (2') de languettes de rondelle conique (2) sont amenées en appui sur une face antérieure selon l'axe de l'embrayage (7) de la plaque d'appui (4) et les extrémités intérieures (3") d'un groupe postérieur (2") de languettes de rondelle conique (2) sont amenées en appui sur une face postérieure de la plaque d'appui (4) opposée à la face antérieure selon l'axe de l'embrayage (7), de telle manière que les extrémités intérieures (3', 3") des deux groupes (2',2") de languettes de rondelle conique (2) enferment la plaque d'appui (4) dans les deux directions axiales de l'embrayage (7), dans lequel la plaque d'appui (4) est conçue pour le serrage enfermant radialement un corps d'actionneur (5) de l'embrayage, de telle manière que le corps d'actionneur (5) et la plaque d'appui (4) puissent être assemblés l'un à l'autre par emboîtement au moyen du serrage radialement orienté, et une rainure périphérique (9, 10) est disposée respectivement à la périphérie intérieure de la plaque d'appui (4) ainsi qu'à la périphérie extérieure du corps d'actionneur (5), dans lequel un anneau de fil élastique (6) peut être disposé dans les rainures (9, 10) en recouvrant les rainures (9, 10), de telle manière que la plaque d'appui (4) et le corps d'actionneur (5) puissent être assemblés par emboîtement dans la direction axiale de l'embrayage (7) au moyen de l'anneau de fil (6).

2. Dispositif à rondelle conique selon la revendication 1, **caractérisé en ce que** des extrémités intérieures (3', 3") des deux groupes (2' 2") de languettes de rondelle conique (2) sont disposées de façon appliquée en alternance le long de la direction périphérique de la rondelle conique ainsi que dans une proportion identique sur la face antérieure et sur la face postérieure de la plaque d'appui (4).

3. Dispositif à rondelle conique selon la revendication 1, **caractérisé en ce que** des extrémités intérieures (3', 3") des deux groupes (2', 2") de languettes de rondelle conique (2) sont disposées de façon appliquée le long de la direction périphérique de la rondelle conique dans des proportions différentes sur la face antérieure et sur la face postérieure de la plaque d'appui (4).

4. Dispositif à rondelle conique selon l'une quelconque des revendications 1 à 3, **caractérisé en ce que** des languettes de rondelle conique (2', 3') appliquées sur la face antérieure de la plaque d'appui (4) présentent une autre forme et/ou une autre raideur de ressort que les languettes de rondelle conique (2", 3") appliquées sur la face postérieure de la plaque d'appui (4).
